# EUROPEAN PATENT APPLICATION

(11) **EP 4 716 187 A1**
(43) Date of publication of application: **25.03.2026**
(21) Application number: 25201724.9
(22) Date of filing: 11.09.2025
(51) Int. Cl.: H04L 67/06

(54) **COMMUNICATION APPARATUS, CONTROL METHOD, AND STORAGE MEDIUM**

(30) Priority: 18.09.2024 JP 2024161281
(71) Applicant: Canon Kabushiki Kaisha, Tokyo, 146-8501 (JP)
(72) Inventor: YOSHIKAWA, Akio, Tokyo, 146-8501 (JP); ANDO, Takayasu, Tokyo, 146-8501 (JP)
(74) Representative: Canon Europe Limited

(57) **Abstract**

A communication apparatus for communicating with an external apparatus having a plurality of connection destinations includes an acquisition unit configured to acquire, from the external apparatus, a transmission destination address of a file, a management unit configured to manage the transmission destination address for each connection destination of the plurality of connection destinations, and a transmission unit configured to transmit the file to the external apparatus by using the transmission destination address.

## Description

### TECHNICAL FIELD

The present disclosure relates to a communication apparatus, a control method, and a storage medium.

### BACKGROUND

With the recent increase in the communication speed, storage services (data servers) are being widely used in broadcasting stations, news agencies, and other front lines of news reporting. In such a storage service, a user uploads captured content data via the Internet to store the data on a cloud. This storage service is branched into multiple projects, and provides a Uniform Resource Locator (URL) for uploading content data for each project connected from the user. A communication apparatus can upload content data by using this URL.

Japanese Patent Laid-Open No. 2018-136630 describes a technique of storing, if an image fails to upload to an upload destination (e.g., located in an external apparatus), transfer failure information in a recording apparatus, wherein the transfer failure information is a combination of the upload destination and the failed image.

The technique described in Japanese Patent Laid-Open No. 2018-136630 can grasp which image has failed to be uploaded to the upload destination. However, the technique has an issue that, if the upload destination is changed during the upload operation, the technique can neither store information about the interrupted upload operation nor restart the upload operation based on the information.

The present disclosure has been embodied in view of the above-described issue.

### SUMMARY

The present disclosure is directed to implementing a technique of restarting, if an upload destination is changed during an upload operation and then the original upload destination is reconnected, the upload operation from the state of the interruption.

The present disclosure in its first aspect provides a communication apparatus for communicating with an external apparatus, the external apparatus having a plurality of connection destinations, the communication apparatus comprising: an acquisition means for acquiring, from the external apparatus, a transmission destination address of a file (e.g., for transmitting to the external apparatus); a management means for managing the transmission destination address for at least one, or each, connection destination of the plurality of connection destinations; and a transmission means for transmitting the file to the external apparatus by using (e.g., based on) the transmission destination address.

The present disclosure in its second aspect provides a control method for controlling a communication apparatus for communicating with an external apparatus, the external apparatus having a plurality of connection destinations, the method being executed by a processor, the method comprising: acquiring, from the external apparatus, a transmission destination address of a file; managing the transmission destination address for at least one, or each, connection destination of the plurality of connection destinations; and transmitting the file to the external apparatus by using (e.g., based on) the transmission destination address.

The present disclosure in its third aspect provides a non-transitory computer-readable storage medium carrying a computer program for causing a computer to execute a method, the method comprising: acquiring, from an external apparatus a transmission destination address of a file; managing the transmission destination address for at least one, or each, connection destination of a plurality of connection destinations; and transmitting the file to the external apparatus by using (e.g., based on) the transmission destination address.

Optional features will now be set out. These are applicable singly or in any combination with any aspect of the disclosure.

The management means may be configured to manage identification information indicating an order of files to be transmitted to the external apparatus for at least one, or each, connection destination of the plurality of connection destinations.

The management means may be configured to delete the transmission destination address used for the file having been transmitted by the transmission means.

The acquisition means may be configured to acquire, from the external apparatus, the transmission destination address corresponding to each of a plurality of files. The plurality of file may be configured with a predetermined size (e.g., a predetermined file division size). The plurality of files may be formed as a result of dividing an original file.

The acquisition means may be configured to issue a request to the external apparatus for the number of transmission destination addresses based on a size of the original file and/or the predetermined size of the plurality of files. The acquisition means may be configured to acquire at least one transmission destination address in response to the request.

The management means may be configured to manage the at least one transmission destination address as a transmission destination address group.

The management means may be configured to manage a management file for each of the plurality of connection destinations, and the management file includes information about a last transmitted file.

The transmission means may be configured to transmit the file to the external apparatus based on the information about the last transmitted file and/or the identification information.

The communication apparatus may further comprise a determination means for, upon change of a connection destination, determining whether the management file of the connection destination after the change is managed. In a case where the determination means determines that the management file of the connection determination is not managed after the change, the management means may be configured to generate a management file of the connection determination after the change.

The management file may further include information about a file being transmitted and/or information about a non-transmitted (e.g., untransmitted) file. The communication apparatus may be an imaging apparatus.

Features of the present disclosure will become apparent from the following description of embodiments with reference to the attached drawings. The following description of embodiments is described by way of example.

### BRIEF DESCRIPTION OF THE DRAWINGS

Fig. 1 illustrates a configuration of a communication apparatus according to a first embodiment.
Fig. 2 illustrates an example of a folder tree configuration in a storage medium.
Fig. 3 illustrates an example of a data structure of a management file (MNG.dat).
Fig. 4 illustrates an example of a data structure of a Uniform Resource Locator (URL) file (001.dat).
Figs. 5A and 5B are a flowchart illustrating an example of processing for generating a management file for each connection destination in a data server according to the present embodiment.

### DESCRIPTION OF THE EMBODIMENTS

Desirable embodiments of the present disclosure will be described in detail below with reference to the attached drawings.

### <First Embodiment>

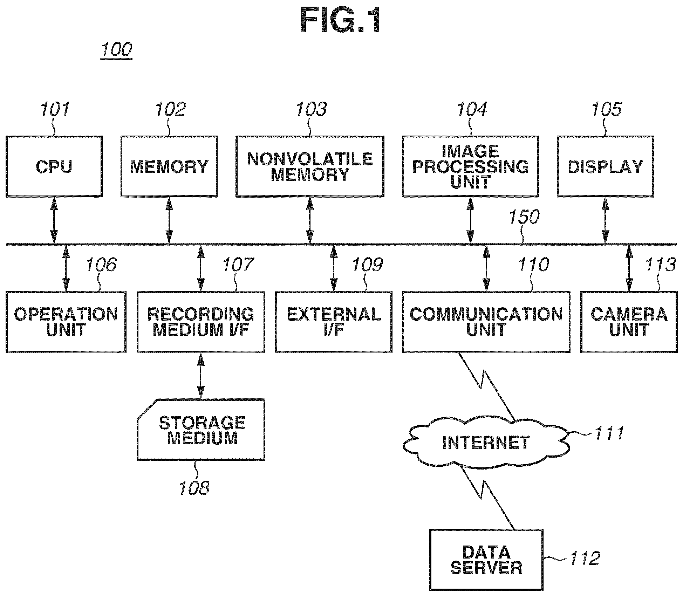

Fig. 1 illustrates an example of a configuration of a communication apparatus 100 according to the present disclosure. The communication apparatus 100 can be configured by using a personal computer (hereinafter referred to as PC), and the like.

Referring to Fig. 1, a Central Processing Unit (CPU) 101, a memory 102, a nonvolatile memory 103, an image processing unit 104, a display 105, an operation unit 106, a recording medium interface (I/F) 107, an external I/F 109, and a communication I/F 110 are connected to an internal bus 150. These units connected to the internal bus 150 are configured to exchange data with each other via the internal bus 150.

The memory 102 includes, for example, a Random Access Memory (RAM), such as a volatile memory using semiconductor elements. According to a program stored in, for example, a nonvolatile memory 103, the CPU 101 controls each unit of the communication apparatus 100 by using the memory 102 as a work memory. The nonvolatile memory 103 stores various kinds of data such as image data and audio data, and various programs necessary for the operation of the CPU 101. The nonvolatile memory 103 includes, for example, a hard disk (HD) and a read only memory (ROM).

Under the control of the CPU 101, the image processing unit 104 subjects image data stored in the nonvolatile memory 103 and the storage medium 108, and an image signal acquired via the external I/F 109 to various image processes. The image processing unit 104 also subjects image data acquired via the communication I/F 110, captured images, and other data to various image processes. The image processing performed by the image processing unit 104 includes analog-to-digital (A/D) conversion processing, digital-to-analog (D/A) conversion processing, image data encoding processing, compression processing, decoding processing, enlargement/reduction (resizing) processing, noise reduction processing, and color conversion processing. The image processing unit 104 may include a dedicated circuit block for performing specific image processing. Depending on the type of image processing, the CPU 101 can perform image processing according to a program without using the image processing unit 104.

The display 105 displays images, Graphical User Interface (GUI) screens forming GUls, and other data under the control of the CPU 101. The CPU 101 generates a display control signal according to a program and controls each unit of the communication apparatus 100 to generate an image signal to be displayed on the display 105 and output the image signal to the display 105. The display 105 displays an image based on the output image signal. The configuration of the communication apparatus 100 itself includes up to the interface for outputting an image signal to be displayed on the display 105, which may be an external monitor (such as a television).

The operation unit 106 is an input device for receiving user operations, including a text information input device (such as a keyboard), pointing devices (such as a mouse and a touch panel), buttons, dials, a joy stick, a touch sensor, and a touch pad. The touch panel, an input device planarly stacked on top of the display 105, outputs coordinate information according to a touched position.

The storage medium 108, such as a memory card, a compact disc (CD), or a digital versatile disc (DVD), is attachable to the recording medium I/F 107. The recording medium I/F 107 writes data to and reads data from the attached storage medium 108 under the control of the CPU 101. The external I/F 109 is an interface for wiredly or wirelessly connecting to an external apparatus, and inputting and outputting image and audio signals.

The communication unit 110 is an interface for connecting to an external data server (an example of an external apparatus). The communication unit 110 includes various communication functions such as Universal Serial Bus (USB), IEEE1394, P1284, Small Computer System Interface (SCSI), modem, Local Area Network (LAN), RS232C, and wireless communications. The communication unit 110 may be connected to a connector for connecting the communication apparatus 100 to an external apparatus (in wired communication), or connected to an antenna (in wireless communication). The communication apparatus 100 according to the present embodiment can exchange data with the external apparatus via the communication unit 111. For example, the communication apparatus 100 can upload image data stored in the storage medium 108 by using the upload Uniform Resource Locator (URL) received from an external data server via the communication unit 110. The URL is an example of a transmission destination address.

The communication unit 110 does not necessarily need to be included in the communication apparatus 100. The communication apparatus 100 only needs to have at least a communication control function for connecting to the internal or external communication unit 110 and controlling the communication unit 110. The CPU 101 controls the communication unit 110 to implement wireless communication with the external apparatus.

A camera unit 113 includes an imaging element (image sensor) such as a Charge Coupled Device (CCD) sensor or a Complementary Metal Oxide Semiconductor (CMOS) sensor that converts an optical image into an electric signal. The camera unit 113 includes a lens group (imaging lens) including a zoom lens and a focusing lens, a shutter having a diaphragm function, an image sensor, an analog-to-digital (A/D) converter for converting an analog signal output by the image sensor into a digital signal, and a barrier for covering the imaging system to prevent dirt and damage. The image processing unit 104 subjects data captured and acquired by the camera unit 113 to predetermined pixel interpolation, resizing processing such as reduction, and color conversion processing. The CPU 101 performs exposure control, range finding control, and Automatic White Balance (AWB) processing based on a calculation result obtained by the image processing unit 104. The image data captured by the camera unit 113 is subjected to the image processing by the image processing unit 104 to be converted into display image data which is then displayed on the display 105. A live view display (LV display) is implemented when the camera unit 113 captures an image, the A/D converter converts the image into a digital signal through A/D conversion and stores the digital signal in the memory 102, and the D/A converter converts the digital signal into an analog signal and successively transfers the analog signal to the display 105.

A live view can be displayed in the still image shooting standby state, the moving image shooting standby state, and the moving image recording mode, in which the captured subject is displayed almost in real time. The CPU 101 controls the camera unit 113 and the image processing unit 104 to start the automatic focus (AF) processing, automatic exposure (AE) processing, AWB processing, and the like in response to a shooting preparation instruction based on a user operation performed on the operation unit 106. In response to the imaging instruction, the CPU 101 performs control to start a series of imaging processes (main imaging) including performing main exposure, reading the signal from the imaging sensor, subjecting the captured image to the image processing by the image processing unit 104 to generate an image file, and recording the image file in the storage medium 108. The imaging instruction can be issued with a user operation performed on the operation unit 106. The camera unit 113 is capable of capturing still images and moving images.

The above-described embodiment is based on a case where the present disclosure is applied to a personal computer. However, the present disclosure is not limited thereto. More specifically, the present disclosure is also applicable to digital cameras and other imaging apparatuses. More specifically, the present disclosure is also applicable to a case where a captured image recorded in a recording medium such as a memory card readable by a digital camera is reproduced and displayed on the display of, for example, a rear face liquid crystal display apparatus on the digital camera. The present disclosure is further applicable to Personal Digital Assistants (PDAs), tablet terminals, and portable telephone terminals such as smart phones.

The present disclosure is further applicable to apparatuses capable of displaying images, such as portable image viewers, printer apparatuses with a display, digital photo frames, music players, game machines, and electronic book readers.

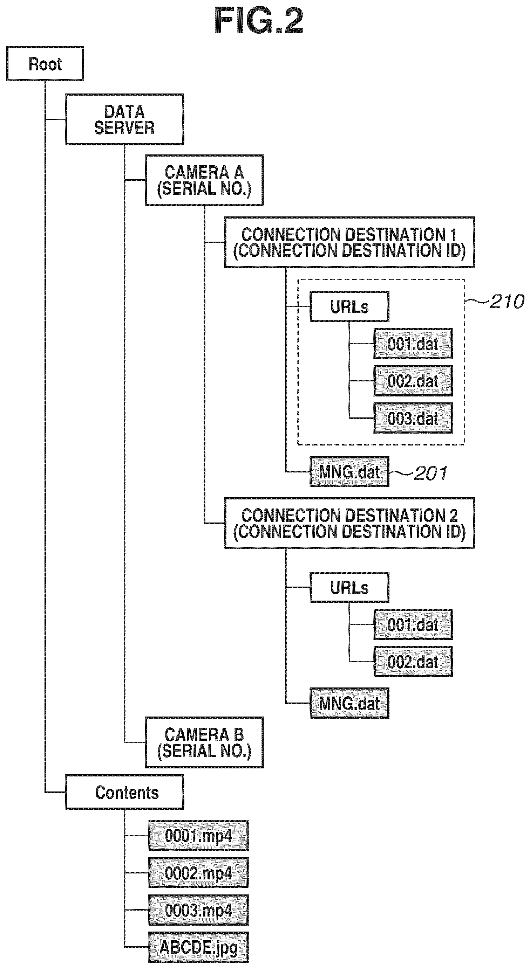

When the communication apparatus 100 acquires the authentication with a connection destination of a data server, the communication apparatus 100 stores a management file (MNG.dat) in the folder tree in the storage medium 108 as illustrated in Fig. 2. Fig. 2 illustrates a management file 201 stored when a camera A connects to a connection destination 1. In this way, the management file 201 is provided for each unique identifier (ID) of the communication apparatus 100 and for each of a plurality of connection destinations in the data server. An example of a unique ID of the communication apparatus 100 is the serial number but is not limited thereto. Although the management file is generated when a new connection destination is authenticated, the timing of the generation is not limited to the example. For example, a management file may be generated at a timing when image data is uploaded for the first time. If a connection has previously been made, the CPU 101 reads an existing management file and resumes control from the former state. If information about the last uploading is not to be carried over, the last management file information may be deleted, and a new management file may be generated. In such a case, URL information (described below) is deleted. The CPU 101 acquires the URL for uploading the upload target file described in the management file from the data server, and then stores the information as files 210 (Fig. 2) in the URLs folder (an example of a transmission destination address group).

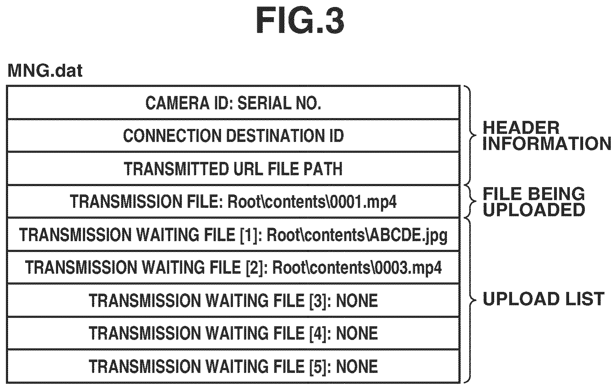

Fig. 3 illustrates an example of a management file structure. The header information includes the serial ID of the communication apparatus 100 and the connection destination ID. To manage the file being uploaded, transmission file paths for the files under the URLs folder is recorded. Even if the connection destination is changed, the CPU 101 can use this information to determine the URL for the last upload operation and restart the upload operation. The upload list records order information indicating the order of the upload target files and file path information for the files. Fig. 3 illustrates that file 0001.mp4 is being uploaded, that the uploaded list can store up to five files, and that two files are reserved for uploading. When the transmission file has been uploaded, transmission waiting file [1] becomes the transmission file, and transmission waiting file [2] becomes transmission waiting file [1]. The CPU 101 repeats this sequence to upload the files in succession.

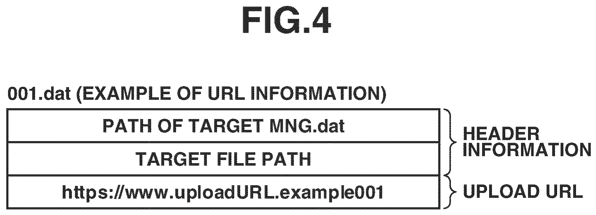

Fig. 4 illustrates an example of a file structure of an upload URL. URL.dat describes the header information and the upload URL. At least one file is provided to this upload URL from the data server based on the file size, a request to the data server, and the like. If there is a plurality of URLs, this mechanism allows one upload target file to be uploaded in a division way (e.g., a divided manner). According to the number of URLs, 001.dat, 002.dat, 003.dat, ... are stored under the URLs folder, and each URL file is deleted for the URL to which the upload operation is completed. When there remains no URL file under the URLs folder, the CPU 101 can grasp (e.g., determine) that the file has been uploaded. The file before the division is an example of the original file.

Examples of a method for managing an upload target file, a method for managing upload URLs, and a file structure have been described above. However, the present disclosure is not limited thereto. The mechanism does not need to be configured with a plurality of folders and files as long as upload target files and upload URLs can be managed for each communication apparatus and for each connection destination.

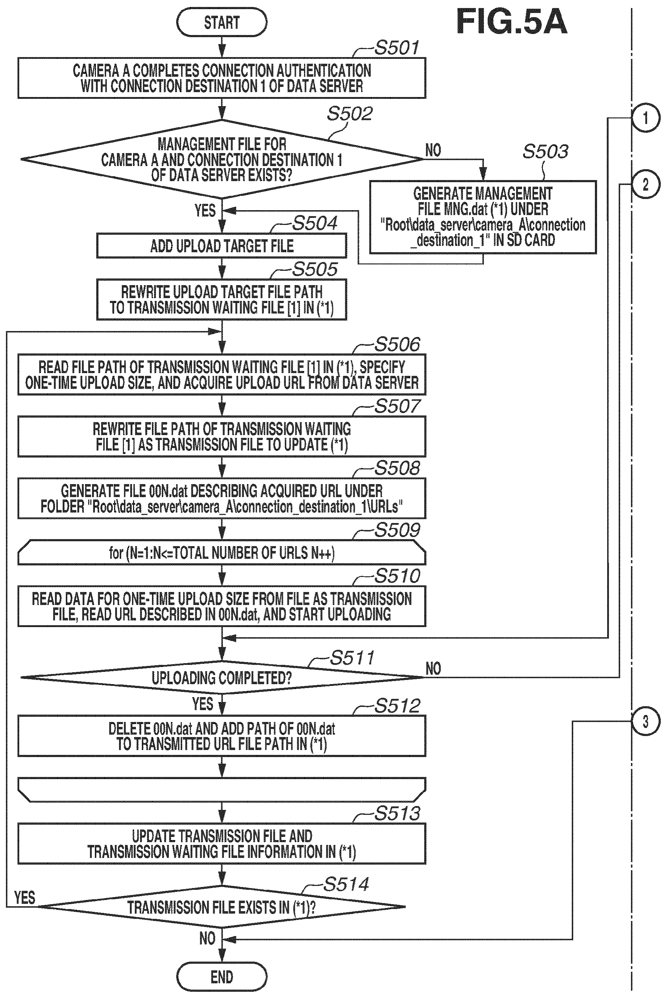

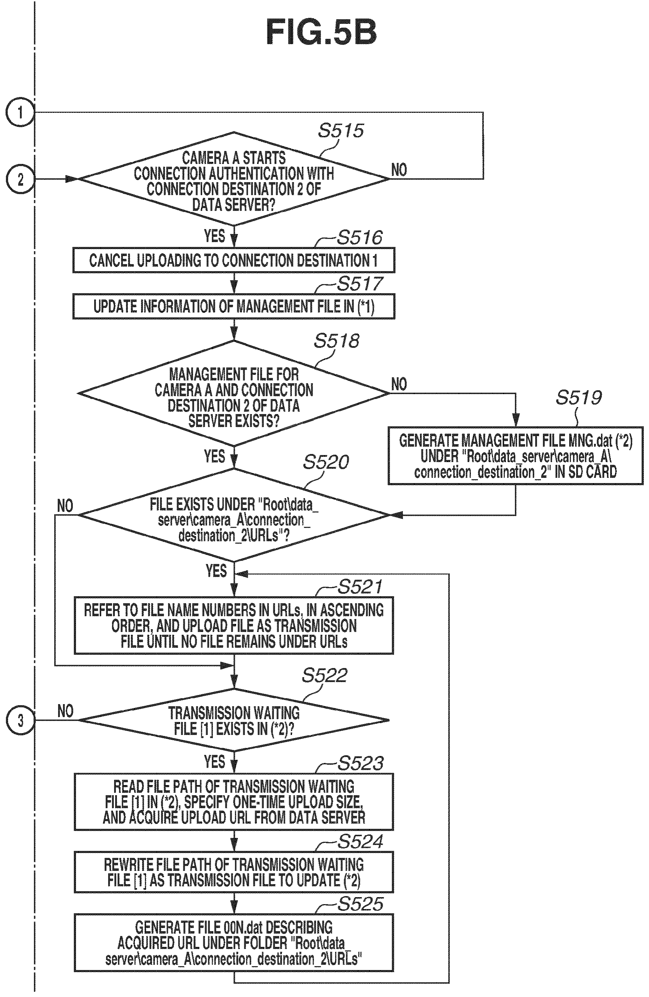

Figs. 5A and 5B are a flowchart illustrating processing for generating a management file when the camera A connects to connection destinations 1 and 2 of the data server.

In step S501, the CPU 101 controls the camera A to complete the connection authentication with the connection destination 1 of the data server. Then, the processing proceeds to step S502. The connection authentication with the data server is completed, for example, when the CPU 101 displays the authentication code provided from the data server on the display 105 and then the authentication code is input on the data server side.

In step S502, the CPU 101 reads the storage medium 108 to determine whether there exists a management file related to the camera A and the connection destination 1 of the data server. If the management file exists (YES in step S502), the processing proceeds to step S504. If no management file exists (NO in step S502), the processing proceeds to step S503.

In step S503, the CPU 101 performs control to generate a management file (*1) such as "Root:\data_server\camera_A\connection_destination_1\MNG.dat" in the storage medium 108.

The above-described path is to be considered as an example. However, to uniquely manage each individual products of the same camera model, the serial number may be used for the folder name. Further, the unique connection destination provided by the data server may be used for the folder name. As long as the management file can be controlled for each connection destination and for each camera, the management file may be managed in any desired form, for example, managed as one file.

In step S504, the CPU 101 receives from the user an instruction to add an upload target file. An upload target file may be added, for example, by adding the last recorded file or by allowing the user to select a desired file from a plurality of files.

In step S505, the CPU 101 performs control to read (*1) stored in the storage medium 108, and rewrites file path information for the file added in step S504 to transmission waiting file [1] in (*1).

In step S506, the CPU 101 reads (*1) stored in the storage medium 108 and acquires the file information from the file path described in transmission waiting file [1]. Then, the CPU 101 determines the division file size, and performs control to acquire the URL information for uploading the file from the data server via the communication unit 110.

In step S507, the CPU 101 performs control to read (*1) stored in the storage medium 108, delete the contents of the file path of transmission waiting file [1], and write the contents to the transmission file.

In step S508, the CPU 101 performs control to store the URLs acquired from the data server in step S506 in the storage medium 108, as the files 210 in URL units under the URLs folder in Fig. 2.

In step S509, the CPU 101 performs control to repeat the upload operation for the number of acquired URLs.

In step S510, the CPU 101 reads (*1) in the storage medium 108, and also reads the upload file existing in the file path in the transmission file. Then, the CPU 101 reads the data for the file size specified in step S506 from the top, and starts the upload operation by using the URL described in 001.dat. When performing the upload operation by using 002.dat and subsequent .dat files, the CPU 101 implements the division transmission by shifting the reading position of each upload file by (upload size x N).

In step S511, the CPU 101 determines whether the upload operation that started in step S510 is completed. If the upload operation is completed (YES in step S511), the processing proceeds to step S512. If the upload operation is not completed (NO in step S511), the processing proceeds to step S515.

In step S512, the CPU 101 deletes 00N.dat file with the upload operation completed stored in the storage medium 108, and adds the path of 00N.dat to the transmitted URL file path portion in (*1). With the transmitted URL file path descried in (*1), information about the transmission process is stored if communication is interrupted during transmission or if the communication destination is changed. Then, when a connection with the same connection destination is re-established, the use of the information enables restarting the upload operation from the state before the interruption. However, the restarting method is not limited thereto as long as the mechanism enables restarting the upload operation by using interruption information in a certain location.

In step S513, if the next upload target file exists, the CPU 101 updates (*1) to set the file as the upload file.

In step S514, the CPU 101 reads (*1) to determine whether there exists any upload target file. If there exists no upload target file (NO in step S514), the processing exits the flowchart. If there exists an upload target file (YES in step S514), the processing returns to step S506.

In step S515, the CPU 101 determines whether the camera A has started the connection authentication with a connection destination 2 of the data server. If the connection authentication has been started (YES in step S515), the processing proceeds to step S516. If the connection authentication has not been started (NO in step S515), the processing returns to step S511.

In step S516, the CPU 101 performs controls to interrupt the upload operation started in step S510. If files describing 00N.dat and subsequent URLs remain in the storage medium 108, the upload operation can also be recorded. For example, in a case of uploading a large file, the CPU 101 does not need to upload the file from the beginning again.

In step S517, the CPU 101 updates information in (*1) and performs end processing of the connection with the connection destination 1.

In step S518, the CPU 101 reads the storage medium 108 and determines whether there exists a management file related to the camera A and the connection destination 2 of the data server. If the management file exists (YES in step S518), the processing proceeds to step S520. If no management file exists (NO in step S518), the processing proceeds to step S519.

In step S519, the CPU 101 performs control to generate a management file (*2) such as "Root:\data_server\camera_A\connection_destination_2\MNG.dat" in the storage medium 108.

In step S520, the CPU 101 determines whether there exists a file describing an upload URL under "Root\data_server\camera_A\connection_destination_2\URLs" in the storage medium 108. If there exists the file (YES in step S520), the processing proceeds to step S521. If there exists no URL file (NO in step S520), the processing proceeds to step S522.

In step S521, the CPU 101 sequentially refers to file name numbers under "Root\data_server\camera_A\connection_destination_2\URLs" stored in the storage medium 108, in ascending order, and uploads each target file. The actual upload operation is similar to the processing in steps S509 to S513, and redundant descriptions thereof will be omitted. A file name number is an example of identification information. However, the identification information is not limited to the example. The identification information may be a character string and does not need to be a file name.

In step S522, the CPU 101 reads (*2) and determines whether there exists an upload target file. If there exists no upload target file (NO in step S522), the processing exits the flowchart. If there exists an upload target file (YES in step S522), the processing proceeds to step S523.

In steps S523 to S525, like steps S506 to S508, respectively, the CPU 101 performs control to acquire upload URL information from the data server, and store the information in the storage medium 108.

A method for generating a management file when a connection is switched between two different connection destinations of the data server, and restarting the upload operation based on the information described in the management file has been described in detail. This method enables restarting the upload operation. In addition, an intermediate file may be generated if the last upload operation is interrupted, by the data server, but the method enables providing an effect of preventing such an intermediate file from remaining.

Figs. 5A and 5B illustrate an example where the CPU 101 sequentially refers the file name numbers in ascending order and uploads each target file in step S521. Thus, the CPU 101 can restart the upload operation from the last untransmitted file (e.g., a file which has not been transmitted, otherwise referred to as a non-transmitted file). However, the method for implementing such an effect is not limited to the example. Examples of methods for implementing such an effect includes a method for referring to "transmitted URL file path" illustrated in Fig. 3. More specifically, the CPU 101 may refer to the transmitted URL file path to determine an untransmitted file.

The present disclosure is not limited to these specific embodiments. Diverse embodiments not departing from the spirit and scope of the present disclosure are also included in the present disclosure. Parts of these embodiments can also be suitably combined.

The present disclosure also includes a case where a program of software for implementing the functions of the above-described embodiments is supplied to a system or an apparatus having a computer capable of executing the program, from a recording medium directly or via wired or wireless communication, and the computer executes the program.

Therefore, to implement the functions and processing of the present disclosure with a computer, the program code itself supplied to and installed on the computer also implements the present disclosure. This means that the computer program itself for implementing the functions and processing of the present disclosure is also included in the present disclosure.

In this case, the computer program may be provided in any form, such as an object code, an interpreter-executable program, or script data supplied to an operating system (OS), as long as the form has program functions.

Examples of recording media for supplying a program include magnetic recording media such as a hard disk and a magnetic tape, an optical/magneto-optical storage medium, and a nonvolatile semiconductor memory.

As an example method for supplying a program, a computer program for forming the present disclosure is stored on a server on a computer network, and a connected client computer downloads the computer program and performs programming.

### (Other Embodiments)

The present disclosure is also achieved by performing the following processing. More specifically, software (program) for implementing the functions of the above-described embodiments is supplied to a system or apparatus via a network or various types of storage media, and a computer (or a control unit or micro processing unit (MPU)) of the system or apparatus reads and executes the program code. In this case, the program and the storage medium storing the program are included in the present disclosure.

While the present disclosure has specifically been described in detail above based on desirable embodiments, the present disclosure is not limited to these specific embodiments. Diverse embodiments not departing from the spirit and scope of the present disclosure are also included in the present disclosure. Parts of these embodiments can also be suitably combined.

Each function unit according to the above-described embodiments may or may not be an individual hardware component. Functions of a plurality of function units may be implemented by a common hardware component. Each of a plurality of functions of one function unit may be implemented by an individual hardware component. A plurality of functions of one function unit may be implemented by a common hardware component. Each function unit may or may not be implemented by an Application Specific Integrated Circuit (ASIC), Field Programmable Gate Array (FPGA), Digital Signal Processor (DSP), and other hardware components. For example, the apparatus may include a processor and a memory (storage medium) storing control programs. Functions of at least some of function units included in the apparatus may be implemented when the processor reads a control program from the memory and executes the control program.

The present disclosure can also be achieved when a program for implementing at least one of the functions according to the above-described embodiments is supplied to a system or apparatus via a network or storage medium, and at least one processor in the computer of the system or apparatus reads and executes the program. Further, the present disclosure can also be achieved by a circuit such as an Application Specific Integrated Circuit (ASIC) for implementing at least one function.

### [Configuration 1]

A communication apparatus for communicating with an external apparatus having a plurality of connection destinations, the communication apparatus comprising,
an acquisition unit configured to acquire, from the external apparatus, a transmission destination address of a file,
a management unit configured to manage the transmission destination address for each connection destination of the plurality of connection destinations, and
a transmission unit configured to transmit the file to the external apparatus by using the transmission destination address.

### [Configuration 2]

The communication apparatus according to configuration 1, wherein the management unit is configured to manage identification information indicating an order of files to be transmitted to the external apparatus for each connection destination of the plurality of connection destinations.

### [Configuration 3]

The communication apparatus according to configuration 2, wherein the management unit is configured to delete the transmission destination address used for the file having been transmitted by the transmission unit.

### [Configuration 4]

The communication apparatus according to configuration 2 or 3, wherein the acquisition unit is configured to acquire, from the external apparatus, the transmission destination address corresponding to each of a plurality of files of a predetermined size, wherein the plurality of files are formed as a result of dividing an original file.

### [Configuration 5]

The communication apparatus according to configuration 4, wherein the acquisition unit is configured to issue a request to the external apparatus for the number of transmission destination addresses based on a size of the original file and the predetermined size of the plurality of files, and wherein the acquisition means is configured to acquire at least one transmission destination address in response to the request.

### [Configuration 6]

The communication apparatus according to configuration 5, wherein the management unit is configured to manage the at least one transmission destination address as a transmission destination address group.

### [Configuration 7]

The communication apparatus according to any one of configurations 2 to 6,
wherein the management unit is configured to manage a management file for each of the plurality of connection destinations, and
wherein the management file includes information about a last transmitted file.

### [Configuration 8]

The communication apparatus according to configuration 7, wherein the transmission unit is configured to transmit the file to the external apparatus based on the information about the last transmitted file and the identification information.

### [Configuration 9]

The communication apparatus according to configuration 8, further comprising a determination unit configured to, upon change of a connection destination, determine whether the management file of the connection destination after the change is managed, wherein, in a case where the determination unit determines that the management file of the connection determination after the change is not managed, the management unit is configured to generate a management file of the connection determination after the change.

### [Configuration 10]

The communication apparatus according to configuration 9, wherein the management file further includes information about a file being transmitted and information about a non-transmitted file.

### [Configuration 11]

The communication apparatus according to any one of configurations 1 to 10, wherein the communication apparatus is an imaging apparatus.

### [Method]

A control method for controlling a communication apparatus for communicating with an external apparatus having a plurality of connection destinations, the method being executed by a processor, the method comprising:
acquiring, from the external apparatus, a transmission destination address of a file,
managing the transmission destination address for each connection destination of the plurality of connection destinations, and
transmitting the file to the external apparatus by using the transmission destination address.

### [Program]

A program for causing a computer to function as a communication apparatus for communicating with an external apparatus having a plurality of connection destinations,
wherein the communication apparatus includes an acquisition unit configured to acquire, from an external apparatus, a transmission destination address of a file, a management unit configured to manage the transmission destination address for each connection destination of the plurality of connection destinations, and a transmission unit configured to transmit the file to the external apparatus by using the transmission destination address.

The present disclosure makes it possible to implement a technique of restarting, if an upload destination is changed during an upload operation and then the original upload destination is reconnected, the upload operation from the state of the interruption.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A communication apparatus (100) for communicating with an external apparatus having a plurality of connection destinations, the communication apparatus comprising:
an acquisition means for acquiring, from the external apparatus, a transmission destination address of a file;
a management means for managing the transmission destination address for each connection destination of the plurality of connection destinations; and
a transmission means for transmitting the file to the external apparatus by using the transmission destination address.

2. The communication apparatus according to claim 1, wherein the management means is configured to manage identification information indicating an order of files to be transmitted to the external apparatus for each connection destination of the plurality of connection destinations.

3. The communication apparatus according to claim 2, wherein the management means is configured to delete the transmission destination address used for the file having been transmitted by the transmission means.

4. The communication apparatus according to claim 2, wherein the acquisition means is configured to acquire, from the external apparatus, the transmission destination address corresponding to each of a plurality of files of a predetermined size, wherein the plurality of files are formed as a result of dividing an original file.

5. The communication apparatus according to claim 4, wherein the acquisition means is configured to issue a request to the external apparatus for the number of transmission destination addresses based on a size of the original file and the predetermined size of the plurality of files, and wherein the acquisition means is configured to acquire at least one transmission destination address in response to the request.

6. The communication apparatus according to claim 5, wherein the management means is configured to manage the at least one transmission destination address as a transmission destination address group.

7. The communication apparatus according to claim 2,
wherein the management means is configured to manage a management file for each of the plurality of connection destinations, and
wherein the management file includes information about a last transmitted file.

8. The communication apparatus according to claim 7, wherein the transmission means is configured to transmit the file to the external apparatus based on the information about the last transmitted file and the identification information.

9. The communication apparatus according to claim 8, further comprising a determination means for, upon change of a connection destination, determining whether the management file of the connection destination after the change is managed, wherein, in a case where the determination means determines that the management file of the connection determination after the change is not managed, the management means is configured to generate a management file of the connection determination after the change.

10. The communication apparatus according to claim 9, wherein the management file further includes information about a file being transmitted and information about a non-transmitted file.

11. The communication apparatus according to any one of claims 1 to 10, wherein the communication apparatus is an imaging apparatus.

12. A control method for controlling a communication apparatus for communicating with an external apparatus having a plurality of connection destinations, the method being executed by a processor, the method comprising:
acquiring, from the external apparatus, a transmission destination address of a file;
managing the transmission destination address for each connection destination of the plurality of connection destinations; and
transmitting the file to the external apparatus by using the transmission destination address.

13. A non-transitory computer-readable storage medium (102) carrying a computer program for causing a computer to execute a method, the method comprising:
acquiring, from an external apparatus, a transmission destination address of a file;
managing the transmission destination address for each connection destination of a plurality of connection destinations; and
transmitting the file to the external apparatus by using the transmission destination address.
